(19) **Europäisches Patentamt**
**European Patent Office**
**Office européen des brevets**

(11) **EP 2 423 466 A2**

(12) **EUROPÄISCHE PATENTANMELDUNG**

(43) Veröffentlichungstag:
   **29.02.2012 Patentblatt 2012/09**

(51) Int Cl.:
   ***F01K 23/06*** *(2006.01)*   ***F01N 5/04*** *(2006.01)*
   ***F02B 39/10*** *(2006.01)*   ***F02C 6/12*** *(2006.01)*

(21) Anmeldenummer: **10008756.8**

(22) Anmeldetag: **23.08.2010**

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO SE SI SK SM TR**
   Benannte Erstreckungsstaaten:
   **BA ME RS**

(71) Anmelder: **Semcon München GmbH**
   **80939 München (DE)**

(72) Erfinder:
   • **Rudzewski, Stephen, Dr.**
     **80939 München (DE)**
   • **Steiner, Sven**
     **85080 Gaimersheim (DE)**

(54) **Vorrichtung zur Energiegewinnung in Kraftfahrzeugen**

(57)    Vorrichtung zur Energiegewinnung im Abgaskreislauf eines Verbrennungsmotors, zur Steigerung der Energieeffizient umfassend mindestens ein Abgasrohr, mindestens eine Abgasturbine, Mittel zum Erzeugen elektrischer Arbeit, und/oder Mittel zum Erzeugen thermischer Arbeit, wobei die Abgasturbine im Abgasrohr angeordnet ist und wobei die von der Abgasturbine bewirkte mechanische Arbeit von den Mitteln zum Erzeugen elektrischer Arbeit in elektrische Arbeit, und/oder wobei die von der Abgasturbine bewirkte thermische Arbeit, in thermische Arbeit umgewandelt wird.

EP 2 423 466 A2

**Beschreibung**

Die Erfindung betrifft eine Vorrichtung zur Energiegewinnung im Abgaskreislauf eines Verbrennungsmotors.

Turbolader bestehen aus einer Abgasturbine und einer von der Abgasturbine beabstandete Verdichterturbine, wobei die Abgasturbine eine Welle antreibt, auf welcher auch die Verdichterturbine angeordnet ist und welche wiederum im Ansaugstrang der Verdichtung dient.

Derartige im Turbolader enthaltene Abgasturbinen werden bei Drehzahlen von ca. 150.000 U/Min bis ca. 200.000 U/Min betrieben. Derartige Drehzahlen sind zu hoch, um einen Standardgenerator anzutreiben. Die Drehzahlen mit Hilfe eines Getriebes zu reduzieren verursacht, erhebliche Geräusche und kommt daher in den meisten Fahrzeugen nicht in Betracht.

Ein alternativer Ansatz zur Energiegewinnung im Abgaskreislauf eines Verbrennungsmotors besteht darin, Elemente, welche Hitze in elektrischen Strom umwandeln, an den durch Abgas erhitzen Stellen eines Abgasstrangs anzubringen. Dieser Ansatz hat jedoch den Nachteil einer unzureichenden Energieausbeute.

Aufgabe ist es daher, einen möglichst großen Betrag der Abgasenergie nutzbar zu machen.

Gelöst wird diese Aufgabe durch die unabhängigen Ansprüche. Ausgestaltungen gehen aus den Unteransprüchen hervor.

1. Gelöst wird die Aufgabe insbesondere durch eine Vorrichtung zur Energiegewinnung im Abgaskreislauf eines Verbrennungsmotors, umfassend mindestens ein Abgasrohr, mindestens eine Abgasturbine, Mittel zum Erzeugen elektrischer Arbeit, und/oder Mittel zum Erzeugen thermischer Arbeit, wobei die Abgasturbine im Abgasrohr angeordnet ist und wobei die von der Abgasturbine bewirkte mechanische Arbeit von den Mitteln zum Erzeugen elektrischer Arbeit, und/oder wobei die von der Abgasturbine bewirkte thermische Arbeit in elektrische Arbeit, und/oder thermische Arbeit umgewandelt wird, wobei die Mittel zum Erzeugen elektrischer Arbeit innerhalb des Turboladers angeordnet sind und/oder wobei die Mittel zum Erzeugen thermischer Arbeit innerhalb des Turboladers angeordnet sind.

Hierbei handelt es sich bei dem Abgasrohr beispielsweise um ein im Abgasstrang eines KFZ eingebautes Standard-Abgasrohr. Die Abgasturbine braucht hierbei nicht unbedingt im originären Abgasrohr angeordnet sein. Denkbar ist auch mindestens eine Ableitung von Abgas in einen weiteren Abgaskanal, der dann alleine oder ergänzend zum bereits im Hauptabgasrohr befindlichen erfindungsgemäßen Abgasturbine eine (weitere) erfindungsgemäße Vorrichtung zur Energiegewinnung im Abgaskreislauf umfasst. Diese Konstellation hat den Vorteil, daß der weitere Abgaskanal in seinen Dimensionen mit einer Querschnittsfläche von z.B. zwischen ca. $5cm^2$ und ca. $85cm^2$ so vorgesehen werden kann, daß sich bei Betrieb der ideale Umdrehungszahlbereich von bis ca. 60.000 1/min des Generators von selbst einstellt.

Fakultativ kann die Turbine daher auch in einem Bypass betrieben werden, oder von einem (ggf. in seinem Durchlass steuerbaren/regelbaren) Bypass umgangen werden.

Bei der Abgasturbine handelt es sich vorzugsweise um eine Abgasturbine, wie sie Teil eines Standard-Turboladers ist, der im Motorenbau, insbesondere KFZ-Motorenbau standardmäßig verwendet wird.

Die Befestigung eines derartigen Abgasturboladers im Abgasstrang kann durch Anflanschen, eine Rohr-Klemmverbindung oder Einschweißen im Abgasstrang erfolgen. Erfindungsemäß eingesetzte Abgasturbolader sind den besonderen Randbedingungen im Abgasstrang ausgesetzt, wie z.B. einer Umgebungstemperatur von z.B. zwischen 300˚C und 900˚C.

Hierbei kann die Abgasturbine derart ausgelegt werden, beispielsweise durch die Dimensionierung ihrer Schaufeln, und/oder beispielsweise durch ihre Anordnung im Abgasstrom, wie beispielsweise eine Anordnung schräg zum Strom, dass ihre Drehzahl gerade so hoch ist, dass ihre Abtriebswelle ohne Zusatzaufwand gelagert werden kann. Für eine Lagerung ohne Zusatzaufwand gängige Drehzahlen liegen erfahrungsgemäß unter etwa 60.000 U/Min.

Alternativ kann jedoch auch ein Mittel zum Erzeugen elektrischer Arbeit, wie z.B. ein Generator unmittelbar an bzw. in dem Turbolader angeordnet werden. Dieser Generator sollte dann über 60.000 U/Min. an Drehzahl verkraften

Als Mittel zum Erzeugen elektrischer Arbeit kann beispielsweise ein drehzahlfester Scheibenläufergenerator eingesetzt werden. Dieser würde dann vom Turbo mechanisch angetrieben werden und die hierdurch erzeugte elektrische Energie z.B. über Kabel an eine Steuerungsvorrichtung und/oder einen Energiespeicher (z.B. Kondensator / Batterie) abgeben. Scheibenläufer gibt es sowohl als Motoren, als auch als Generatoren bzw. als Kombination aus beidem.

Weiterhin können Generatoren eingesetzt werden, deren Magnete auf der Rotorseite angeordnet sind und die Spulen auf der Statorseite angeordnet sind. Wo die Magnete und wo die Spulen angeordnet sind, liegt im eigenen Ermessen. Der Terminus "Scheibenläufer" gibt dem Fachmann ohne Zusatzinformation (wie z.B. bürstenlos) keinen Aufschluß darüber, ob sich die z.B. Magnete auf dem Stator oder dem Rotor befinden.

Im Fall, dass der Magnet oder die Spule des Generators am Verdichterrad oder dem Turbinenrad fixiert ist, hat dies den Vorteil, dass der Bauraum optimal ausgenutzt werden kann, und dass beispielsweise durch eine hierdurch bewirkte zusätzliche Masse das Rotationsverhalten des Turbinenrads beeinflusst werden kann.

Ergänzend kann auch ein "Thermoelektrischer Generator" (TEG), in welchem ein Stromfluß durch eine Temperaturdifferenz hervorgerufen wird, welcher sich in die Peltier- und Seebeck-Elemente aufteilt, eingesetzt werden.

Dieses würde dann in einem erhitzten Bereich des Abgasstrangs und/oder Generators und/oder der thermodynamischen Baugruppe angeordnet werden und über Kabel dann eine Steuerungsvorrichtung und/oder die Batterie mit elektrischer Energie versorgen.

Wenn die von der Abgasturbine bewirkte mechanische Arbeit von den Mitteln zum Erzeugen elektrischer Arbeit, und/oder von den Mitteln zum Erzeugen thermischer Arbeit in elektrische Arbeit, und/oder thermische Arbeit umgewandelt wird, hat dies den Vorteil, dass die dem Abgasstrom selbst innewohnende Energie zusätzlich ausgenutzt werden kann, wodurch die Energieeffizienz gesteigert wird. Dies kann beispielsweise dadurch geschehen, dass die der Abgasturbine innewohnende mechanische Rotationsenergie mit Hilfe einer Welle beispielsweise auf einen Generator übertragen wird, der wiederum mit Hilfe dieser rotierenden Welle Strom erzeugt. Die Ausbeute hängt von mehreren Faktoren ab. Einem PKW-Turbolader gelingt es, in etwa zwischen 5-15% der im Abgas enthaltenen Energie in mechanische Arbeit umzuwandeln. Diese mechanische Arbeit wird dann weiter in dem Scheibenläufer in elektrische Arbeit umgewandelt.

Statt außerhalb des Turbos, kann der Generator auf die erfindungsgemäße Weise auch innerhalb des Turbladers angeordnet werden.

Gängige Abstände innerhalb eines Turboladers sind oft eine Determinante zur Optimierung des Zuflusses des Schmieröls und liegen meist zwischen 2-5cm, können aber auch größer gestaltet werden.

Hierbei bedeutet "innerhalb des Turboladers" insbesondere zwischen der Abgasturbine und der Verdichterturbine. Der Zwischenraum zwischen diesen beiden Komponenten ist geeignet insbesondere einen so genannten "Scheibenläufer" aufzunehmen. Hierbei bedeutet "innerhalb des Turboladers" auch bzw. ergänzend, die Komponenten zwischen Verdichter(bzw. Turbinen)rad und dem Verdichter(bzw. Turbinen)gehäuse anzuordnen. Die Anordnung zwischen z.B. Verdichterrad und Verdichtergehäuse ist vorzuziehen, da das Gehäuse mit Statoren und der Rotor nicht zusätzlich eingebracht werden müssen.

Der Generator ist somit vorzugsweise im Turbo angeordnet. Innerhalb des Turbo selbst kann er also angeordnet werden, indem der Generator als Scheibenläufer in die Turbine und/oder Verdichter und/oder auf die Welle zwischen Turbine und Verdichter gesetzt wird. Zur Fixierung kann der Rotor über z.B. eine Mitnehmerverzahnung oder einen Kegelpressverband miteinander verbunden werden.

Alternativ und/oder ergänzend kann ein Scheibenläufer auch an der Außenseite des Turbos und oder ganz beabstandet von diesem angeordnet werden. Es können auf diese Weise auch mehrere Generatoren betrieben werden. Diese können beispielsweise über ein eigenes, motorfestes (also am Motor befestigtes) Gehäuse fixiert werden.

Eine derartige Anordnung hat den Vorteil, daß die Turbo-Generator-Kombination einen nur geringen Bauraum umfasst. Außerdem wird auf diese Weise weniger bewegte Masse erzeugt, z.B. aufgrund der hierdurch eingesparten Wellenverlängerung.

Weiterhin ist bei einer derartigen Anordnung ein geringerer Energieaufand zum Betreiben.

Ist der Generator auf die erfindungsgemäße Weise am und/oder im Turbolader angeordnet, kann hierdurch der Arbeitsbereich des Turboladers in den oberen Drehzahlbereichen erweitert werden, wenn bei erhöhtem Abgasstrom die der Elektromaschine entnommene elektrische Energiemenge geregelt erhöht. Dieser Regelungseingriff kann dadurch bewirkt werden, indem an den Generator ein definierter (änderbarer) elektrischer Widerstand angeordnet ist. Hierdurch kann die Generatorlast erhöht werden, wodurch sich wiederum sein Schleppmoment erhöht. Ein derartiges Abbremsen eines Turboladers bewirkt, daß der Turbo in seinem optimalen Arbeitsbereich gehalten werden kann. Über eine Regelungseinrichtung kann der Betrieb des Generators besonders effizient im optimalen Arbeitsbereich gefahren / gehalten werden.

Auf diese Weise kann die Drehzahl des Turboladers auf einem gewünschten und verträglichen Niveau (Arbeitsbereich bei ca. 100.000 U/Min und 300.000 U/Min je nach Baugröße des Turboladers ) gehalten werden kann.

Der Arbeitsbereich des Turboladers kann auf die erfindungsgemäße Weise auch in die unteren Drehzahlbereiche hinein erweitert werden, indem die Elektromaschine die im Speichermedium zur Verfügung stehende Energie nutzt und (geregelt) umwandelt und hierdurch den Turbolader unterstützt. Auf diese Weise wird der Turbolader auf die erfindungsgemäße Weise in seinem Anlauf unterstützt, wodurch das so genannte Turboloch minimiert werden kann.

Da diese Wellen jedoch gelagert werden müssen und da bei den im Abgasstrom herrschenden hohen Temperaturen eine Lagerung mit zunehmender Drehzahl der zu lagernden Welle aufwendiger wird, erscheinen die für Turboanlagen, in welchen derartige Abgasturbinen oft verbaut sind, gängigen Drehzahlen von etwa 150.000 U/Min bis etwa 200.000 U/Min zu hoch und damit zu unwirtschaftlich.

Die Verwendung einer zweiten, außerhalb eines Turbos im selben Abgasstrom angeordneten Abgasturbine ist hierbei denkbar. Dies hätte den Vorteil, dass dessen Drehzahl mit Hilfe baulicher Maßnahmen und / oder mit Hilfe z.B. der Dimensionierung der Schaufeln ohne Verwendung eines lauten und fehleranfälligen Getriebes an die vom Generator verarbeitbare Drehzahl angepasst werden kann. Eine derartige bauliche Maßnahme wäre beispielsweise ein schräger Einbau und/oder ein Einbau in eine Biegung des Abgasrohrs.

Ergänzend bzw. alternativ können Mittel zum Erzeugen thermischer Arbeit Verwendung finden.

Derartige Mittel zum Erzeugen thermischer Arbeit umfassen beispielsweise einen Dampferzeuger, wobei in diesem Dampferzeuger Dampf erzeugt. Weiterhin umfassen sie einen Generator, wobei in diesem Generator eine Dampfturbine angeordnet ist, und wobei der Dampf des Dampferzeugers diese Dampfturbine antreibt und wobei die Dampfturbine den elektrischen Generator antreibt.

In dieser Ausgestaltungsform besteht die Möglichkeit, dass der Dampferzeuger dazu dient, zu hohe Drehzahlen von beispielsweise etwa 150.000 U/Min bis etwa 200.000 U/Min auf für einen Generator gut nutzbare Umdrehungszahlen von etwa 10.000 U/Min bis etwa 60.000 U/Min zu reduzieren, die wiederum geeignet sind, einen elektrischen Generator anzutreiben.

Eine Ausgestaltungsform der Erfindung umfasst als Mittel zum Erzeugen elektrischer Arbeit einen Generator, der wiederum seine Arbeit an einer Welle bereitstellt.

2. Eine weitere Ausgestaltungsform der Erfindung umfasst als Mittel zum Erzeugen elektrischer Arbeit einen Scheibenläufer. Ein Scheibenläufer kann als Elektromotor bzw. Elektrogenerator eingesetzt werden, dessen Aufbau die Form einer Scheibe hat. Hierbei werden die Komponenten des Generators z.B. in axialer Richtung auf der Scheibe angebracht, wobei der Rotor einen Eisenkern enthalten kann oder nicht.

Scheibenläufer weisen darüber hinaus eine ihnen eigentümliche Bauform aus, da ihr Durchmesser üblicherweise größer ist, als ihre Länge. Hierdurch eigen sie sich in besonderem Maße, um innerhalb eines Turbos zwischen einer Abgasturbine und Verdicherturbine angeordnet zu werden bzw. in diese integriert zu werden. Alternativ und/oder ergänzend kann er auch an der Außenwand des Turbos angeordnet werden. Diese können dort formschlüssig geklebt bzw. verschraubt werden.

Wird die Scheibe auf der Welle zwischen Verdichter- oder Turbinengehäuse und Verdichter- oder Turbinenrad oder auf der Welle zwischen Verdichter- und Turbinengehäuse angeordnet, dann läuft sie in einem engen Spalt zwischen Permanentmagneten.

Die Magneten werden bevorzugterweise an den Gehäusen angebracht, die als Stator ein festes Magnetfeld erzeugen. Der magnetische Kreis wird über ein weichmagnetisches Material außerhalb der Scheibe geschlossen. Der elektrische Strom kann z.B. über Kohlebürsten geführt werden; diese können im einfachsten Fall direkt die Scheibe berühren.

Scheibenläufer haben außerdem den baulichen Vorteil, dass die Magnete auf/in dem Rotor mit sehr geringem Aufwand formschlüssig verbaut werden können und so eine höhere mechanische Stabilität aufweisen.

Scheibenläufer können als Ein- oder Zweischeibenläufer ausgeführt werden. Beim Einscheibenläufer läuft der Rotor neben dem Stator (auf derselben Drehachse), beim Zweischeibenläufer läuft der Rotor zwischen zwei Statoren (Wirkungsgrad).

Da die Scheibe sehr leicht gebaut werden kann und somit ein geringes Trägheitsmoment aufweist, können Scheibenläufermotoren besonders rasch beschleunigen und abbremsen (in bis zu ca. einer Millisekunde, je nach Größe).

Da die Wärmekapazität der Scheibe gering ist, besteht bei kurzzeitiger Überlastung durch den Temperaturanstieg eine gewisse Gefahr einer Zerstörung. Durch die Integration der Komponenten in den Turbolader kann diesem Problem begegnet werden, da z.B. auf der Statorseite ein massives Gehäuse vorhanden ist, welches überschüssige Wärme ableiten kann. Auf der Rotorseite übernimmt diese Rolle der "Rotor" (zumindest auf der Verdichterseite). Dieses ist zum bevorzugt aus Aluminium (dadurch hoher Wärmeleitkoeffizient) und zum anderen wird dies ständig durch dessen Arbeitsmedium, die Ansaugluft gekühlt.

Turbinenseitig werden bevorzugterweise die Magnete im Stator (also Turbinengehäuse) untergebracht. Dieses wird wiederum wassergekühlt.

Besonders bevorzugt ist ein Scheibenläufer umfassend einen Rotor mit dort eingebrachten Hartmagneten (unter Inkaufnahme eines Wirkungsgradverlusts ist auch die Verwendung eines Weichmagnets möglich) welches das Verdichterrad des Turbos darstellt. Es ist jedoch auch möglich eine zusätzliche Scheibe mit Magneten am Verdichterrad anzubringen, statt dieses selbst als Rotor auszubilden.

Beispielsweise können Scheibenläufer mit eisenlosem Rotor eingesetzt werden. Die Wicklungen derartiger Scheibenläufer können beispielsweise auf einer dünnen Isolierschicht in Form von Leiterbahnen einer gedruckten Schaltung ausgeführt sein, und/oder aus massiveren Kupfer- oder Aluminiumleitern (Drähte oder gestanzte Teile) bestehen. Die Verwendung von Aluminium hat hierbei den Vorteil einer geringeren Masse.

Die Spulen werden bevorzugterweise mit Ferritkernen direkt in das Verdichtergehäuse eingebracht. Die Spulen auf dem Stator anzuordnen hat den Vorteil, dass keine aufwendige Drehdurchführung (Schleifring, Bürsten o.Ä. zur Stromabfuhr) benötigt wird. Zudem kann variiert werden, ob die Spulen auf dem Stator oder Rotor angeordnet werden. Auch diese können dort formschlüssig geklebt bzw. verschraubt werden.

Die Verkabelung zum Transport der Spannung und des Stroms wird bevorzugterweise durch Bohrungen herausgeführt.

Die E-Maschine kann sowohl 1-,2-phasig wie auch 3-phasig ausgeführt werden, wenn die Anzahl der Spulen n mal 6 beträgt. In diesem Fall würde bei einer 1-Phasen-Schaltung beim Motorbetrieb der Wechselrichter entfallen, die Maschine könnte dann direkt an den Energiespeicher mit Gleichstrom angeschlossen werden. Im Generatorbetrieb muß die der 1-Phasenmaschine dann entnommene Wechselspannung vor dem Einspeisen in den Energiespeicher gleichgerichtet werden. Hierzu ist dann in die elektrischen Leitungen ein Gleichrichter zu integrieren.

Bei der 3-Phasen-Elektromaschine ist sowohl im Motor- wie auch im Generatorbetrieb entweder jeweils ein Wechselrichter bzw. Gleichrichter vorzusehen. Der 3-Phasenbetrieb weist den Vorteil auf, über die Anwendung von entweder Stern- oder Dreieckschaltung der Phasen wählen zu können, ob man einen höheren Strom oder eine höhere Spannung abgreift oder einspeist.

Für die Ausführung der Erfindung ist eine 3-Phasenmaschine auch besonders bevorzugt, weil diese prinzipiell für höchste Dauerleistungen ausgelegt werden können. 1-Phasenmaschinen werden insbesondere für Leistungen von unter ca. 5 Kilowatt verwendet und liefern keine kontinuierliche Leistung.

Ein besonderer Vorteil von Scheibenläufern liegt in der hohen Leistungsdichte, die insbesondere durch die dünne Bauweise der Wicklungen ermöglicht wird. Durch eine große Oberfläche sind die Wicklungen sehr gut gekühlt und können mit hohen Stromdichten betrieben werden.

Bei Scheibenläufern wirken im Motorbetrieb nur dann magnetische Kräfte auf den Rotor, wenn die Scheibe von Strom durchflossen wird, es gibt daher keine "Zahnung", der Rotor des ausgeschalteten Motors hat also keine Vorzugsrichtungen. Eine ähnliche Anordnung, bei der die Spulen statt als Scheibe in Form eines Zylinders ausgebildet sind, ist als Glockenläufer- oder Glockenankermotor bekannt. Zwischen beiden besteht kein prinzipieller Unterschied. Derartige Motoren können auch als Generatoren verwendet werden, indem sie mechanisch angetrieben werden (z.B. auf die erfindungsgemäße Weise durch die Anordnung in einem Turbo).

Eisenlose Glocken- und Scheibenläufer werden meist aus Backlackdraht hergestellt. Dieser trägt zwei Isolationsschichten unterschiedlichen thermischen Verhaltens, die Wicklung lässt sich daher ohne Isolationsschäden in Form pressen und thermisch stabilisieren ("backen").

Besonders bevorzugt ist die Verwendung eines bürstenlosen Scheibenläufer: Der Begriff Scheibenläufer wird auch für Vorrichtungen verwendet, bei denen die Scheibe ein Permanentmagnet ist, und feststehende Spulen auf einer Seite (oder beiden Seiten) der Scheibe ein Magnetfeld erzeugen; gegenüber den zuvor beschriebenen Scheibenläufern mit eisenlosem Rotor sind in dieser Ausführung dann also Rotor und Stator vertauscht. Der Vorteil dieser Anordnung liegt darin, dass keine Bürsten zur Stromzuführung auf den Rotor benötigt werden, und der Motor / Generator damit zuverlässiger wird.

Scheibenläufermotoren sind für Leistungen von ca. 10 W bis über 10 kW erhältlich; bürstenlose Scheibenläufer auch für kleinere Leistungen.

3. Im Falle einer Abschaltung des Verbrennungsmotors kann außerdem auf die erfindungsgemäße Weise der Turbolader durch die Elektromaschine weiterhin betrieben werden, um zum Schutze seiner Komponenten eine geregelte Abkühlung zu bewirken. Bei einem zu schnellen Abkühlen eines ausgeschalteten Turboladers kann es zu einer Verkokung der Lager kommen. Eine derartige Verkokung kann verhindert werden, durch das Nachlaufen, bis eine Temperatur erreicht wird, die für die Lager des Turbo ungefährlich ist, beispielsweise unter die ca. 300 Grad, bzw. unter eine Abgastemperatur von unter 400 Grad.

4. Eine weitere Ausgestaltungsform der Erfindung umfasst zur Einstellung der Drehzahl der Abgasturbine ist ein Turbinenrad mit variabler Turbinengeometrie, und/oder variabler Geometrie des Abgasstrangs vorgesehen. Dies hat den Vorteil, daß die Drehzahlen der Turbine während des Betriebs verändert werden können.

6. Eine weitere Ausgestaltungsform der Erfindung umfasst eine Wasserpumpe, wobei die von der Abgasturbine bewirkte mechanische Arbeit die Wasserpumpe antreibt. Als "Wasserpumpe" wird hierbei eine jede in einem KFZ verbaubare Wasserpumpe verstanden. Dies hat den Vorteil, dass beispielsweise die von der Dampfturbine oder auf eine andere Weise erzeugte reduzierte Umdrehungszahl zusätzlich zur Erzeugung elektrischer Energie dazu genutzt werden kann, die für den Betrieb der Wasserpumpe nötige mechanische und/oder elektrische Energie zu erzeugen. Eine eigene Wasserpumpe eigens zum gesteuerten Abkühlen des Turbo ist vorteilhaft, indem beispielsweise eine kleinere Wasserpumpe eigens für den Nachlauf eingesetzt wird. Dies reduziert dann die Nachlaufzeiten des Turbo. Zur gezielten Kühlung des Turboladers kann auf diese Weise auch eine Kühlwasserpumpe direkt oder mittels einer geregelten oder ungeregelten Kupplung mechanisch vom Turbolader selbst angetrieben werden.

Auf diese Weise können auch weitere Pumpen im Kraftfahrzeug in ihrem Betrieb unterstützt werden, wie z.B. die Kraftstoffpumpe etc.

7. Im Fall, dass die von der Abgasturbine bereitgestellte mechanische Arbeit den Klimakompressor antreibt, hat dies den zusätzlichen Vorteil, dass die von der Dampfturbine erzeugte reduzierte Umdrehungszahl zusätzlich zur Erzeugung elektrischer Energie und/oder dem Antrieb der Wasserpumpe, auch noch dazu genutzt werden kann, die für den Betrieb des Klimakompressors nötige mechanische und/oder elektrische Energie hervorzubringen.

Eine Möglichkeit der Unterstützung des Klimakompressors kann dadurch erwirkt werden, indem auf die erfindungsgemäße Weise elektrische Energie erzeugt wird, die dann wiederum einen Elektromotor antreibt, der dann wiederum den Klimakompressor antreibt, bzw. in seinem Antrieb unterstützt.

Die Aufgabe wird weiterhin gelöst durch einen Abgasturbolader, umfassend eine beschriebene Vorrichtung zur Energiegewinnung im Abgaskreislauf eines Verbrennungsmotors.

Abgasturbolader bestehen aus einer Abgasturbine und einer Verdichterturbine, wobei die Abgasturbine eine Welle antreibt, welche wiederum im Ansaugstrang der Verdichtung dient. Diese Welle kann theoretisch auch zur Erzeugung der elektrischen oder thermischen Arbeit eingesetzt werden. Die bei derartigen Turboladern üblichen Drehzahlen von ca. 150.000 U/Min bis ca. 200.000 U/Min betreffen wegen ihres Übersetzungsverhältnisses von 1:1 sowohl die Abgasseite, als auch die Ansaugseite. Wird erfindungsgemäß die in einem derartigen Turbolader verbaute Abgasturbine im Rahmen der beschriebenen Vorrichtung zur Energiegewinnung im Abgaskreislauf eines Verbrennungsmotors genutzt, so hat dies den Vorteil, dass entweder mehr als eine Abgasturbine (z.B. in Reihe und/oder (z.B. in Bypassen) parallel geschalten) genutzt werden kann, oder dass zur im Turbo verbauten Abgasturbine keine zweite verbaut werden muß, wobei in diesem Fall zwangsweise auch die hohen Drehzahlen in Kauf genommen werden.

Eine E-Maschine kann bei diesen hohen Drehzahlen insbesondere durch die Verwendung eines integrierten Scheibenläufers (da dieser bauart- und integrationsbedingt drehzahlfester ist, als andere E-Maschinen) besonders vorteilhaft betrieben werden.

Um diese Drehzahlen zu reduzieren, ist es beispielsweise denkbar, einen größeren Turbolader verwendete und/oder einen Teil des Stroms am Lader vorbei leitet und/oder die Turbinengeometrie variabel zu gestalten und/oder reinen Generator mit einem Lastwiderstand zu versehen.

Ein im Abgasstrom ein rotierbares Element vorzusehen, welches durch den Abgasstrom in Rotation versetzt wird, welche wiederum geeignet ist, alternativ zur Turbowelle, oder diese ergänzend, auf die beschriebene Weise, elektrische Energie zu erzeugen.

Dieses rotierende Element kann auch ein quer zum Abgasstrom liegende Welle sein, die durch den Abgasstrom mit Hilfe von Oberflächenreibung in Drehung versetzt wird.

Eine weitere Ausgestaltungsform der Erfindung umfasst eine Wasserpumpe, wobei diese wiederum eine Kühlwasserpumpe des Turboladers umfassen kann. Dies hat den Vorteil, dass beispielsweise die von der Dampfturbine erzeugte reduzierte Umdrehungzahl zusätzlich zur Erzeugung elektrischer Energie dazu genutzt werden kann, die für den Betrieb der Kühlwasserpumpe des Turboladers nötige mechanische und/oder elektrische Energie hervorzubringen.

Im Fall, dass eine Elektromaschine den erwähnten Generator umfasst, hat dies den Vorteil, da eine Elektromaschine sowohl die Eigenschaften eines Generators, als auch eines Motors in sich vereinigt, mit Hilfe der Motoreigenschaft dieser Elektromaschine der Antrieb anderer Elemente des Motors oder seiner Nebenaggregate unterstützt werden kann. So kann beispielsweise der Turbolader in seinem Betrieb unterstützt werden wodurch das Turboloch reduziert werden kann.

Die Erfindung umfasst weiterhin eine z.B. elektrische Steuer-und Regeleinheit. Diese ist vorzugsweise außerhalb des Turbos, bzw. an einer sich nicht drehenden Stelle des Turbos angebracht. Diese Steuer- und Regeleinheit kommuniziert über Leitungen mit dem Energiereservoir (z.B. Batterie) einerseits und fakultativ mit einer Eingabeeinheit, über die der Fahrer des KFZ Funktionen schalten und/oder ändern kann. Diese Funktionen werden in der Steuer- und Regeleinheit umgesetzt und in Gestalt von Funktionsbefehlen an die erfindungsgemäße Vorrichtung zur Energiegewinnung im Abgaskreislauf weitergeleitet und über dort angeordnete Regel- und Steuerelemente deren Verhalten beeinflussen. Außerdem kann die Vorrichtung zur Energiegewinnung im Abgaskreislauf mit Hilfe von Sensoren Betriebszustände erfassen, diese über Leitungen an die Steuer- und Regeleinheit kommunizieren wo sie den in der Steuer- und Regeleinheit enthaltenen Algorithmen entsprechend abgearbeitet werden.

Die Aufgabe wird weiterhin gelöst durch einen Motor, umfassend einen beschriebenen Abgasturbolader und/oder eine beschriebene Vorrichtung zur Energiegewinnung im Abgaskreislauf eines Verbrennungsmotors. Derart ausgestattete Motoren sind durch die verbesserte Ausnutzung der in der Abgaswärme enthaltenen Energie energieeffizienter, was wiederum Betriebskosten und die Umweltbelastungen reduziert.

Die Aufgabe wird weiterhin gelöst durch ein Fahrzeug umfassend einen derartigen Motor. Als Fahrzeuge kommen hierbei Fahrtzeuge zu Land (KFZ (Auto, motorbetriebene Zweiräder), Lastkraftwagen), Fahrzeuge zu Wasser, und Fahrzeuge zur Luft in Betracht.

Weitere Ausgestaltungsformen gehen aus den Fig. hervor.

Hierbei zeigen:

Fig. 1 einen Turbolader im Schnitt nach dem Stand der Technik;

Fig. 2 eine Verdichterturbine, umfassend einen Generator, der an die Welle der Verdichterturbine angeschlossen ist;

Fig. 3 eine Verdichterturbine, umfassend einen Generator, der auf der Welle der Verdichterturbine, sowie einen Generator, der in den Schaufeln der Verdichterturbine angebracht ist;

Fig. 4 eine Anordnung anzutreibender Wellen in einem Abgasstrom;

Fig. 5 einen Turbinenläufer;

Fig. 6 einen Verdicherläufer;

Fig. 7 eine in der Mitte angeordnete Scheibe;

Fig. 8 a-g diverse Möglichkeiten eines elektrischen Anschlusses;

Fig. 9 a, b eine Sternschaltung bzw. eine Dreieckschaltung mit Brückengleichrichter.

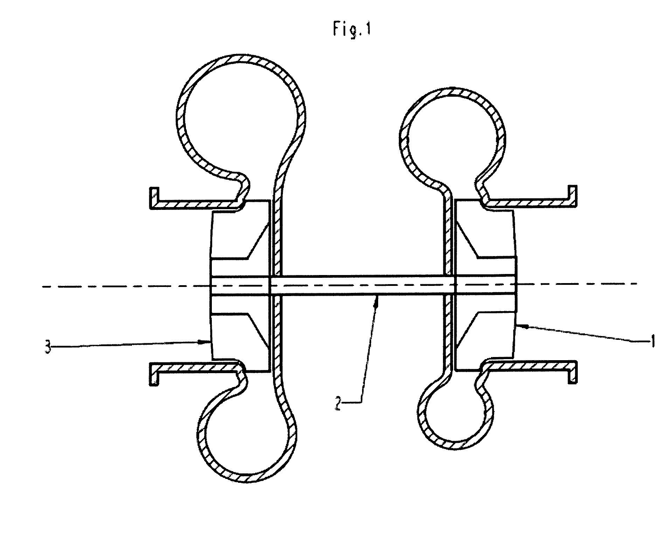

Insbesondere zeigt Fig. 1 einen Turbolader im Schnitt nach dem Stand der Technik, wobei dieser Turbolader eine Abgasturbine 1 im Abgasstrom, sowie eine Verdichterturbine 3 im Zulauf aufweist. Beide sind über die Welle 2 im Drehzahlverhältnis 1:1 miteinander verbunden.

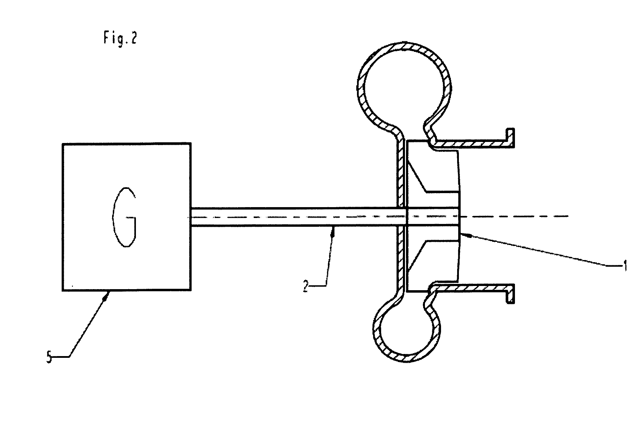

Fig. 2 zeigt eine im Abgasstrom angeordnete Verdichterturbine 1, welche auf einer Welle 2 angeordnet ist und mit deren Hilfe einen Generator 5 "G" antreibt. Nicht dargestellt ist, daß die Geometrie des Turbinenrads und/oder die Geometrie des Abgasrohrs variabel sein können.

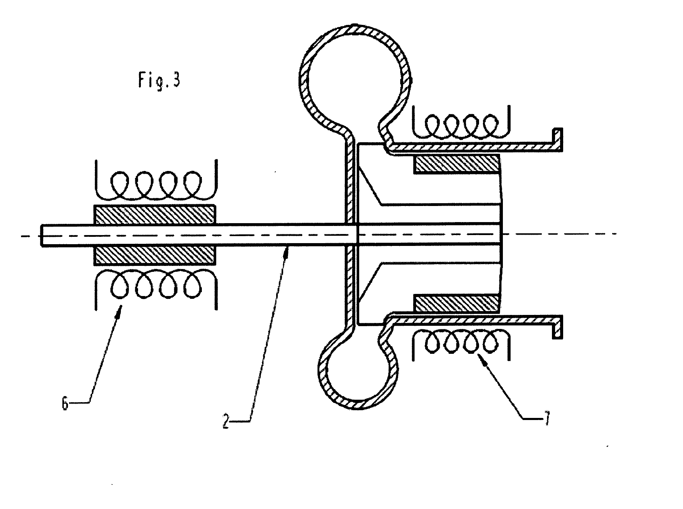

Fig. 3 zeigt eine Verdichterturbine eines Turboladers, umfassend einen Generator 6, der auf der Welle 2 angeordnet ist, sowie einen Generator 7, der in diesem Fall in den Schaufeln der Verdichterturbine angeordnet ist.

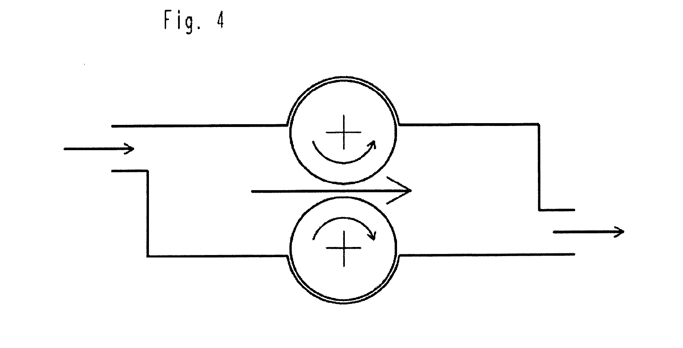

Fig. 4 zeigt eine Anordnung zweier anzutreibender Wellen in einem Abgasstrom, wie sie zur Einstellung einer für den Betrieb eines Generators geeigneten Umdrehungsgeschwindigkeit geeignet ist. Der Antrieb der Welle kann hierbei über Friktion des Abgases mit der Wellenoberfläche erfolgen. Parameter, mit deren Hilfe der Drehzahlbereich einstellbar wäre sind u.a. der Wellendurchmesser, die Oberflächenrauheit der Welle, die Geometrie der Abgaszuführung. Bitte hier eine beispielhafte Ausführung mit Zahlen ausführen.

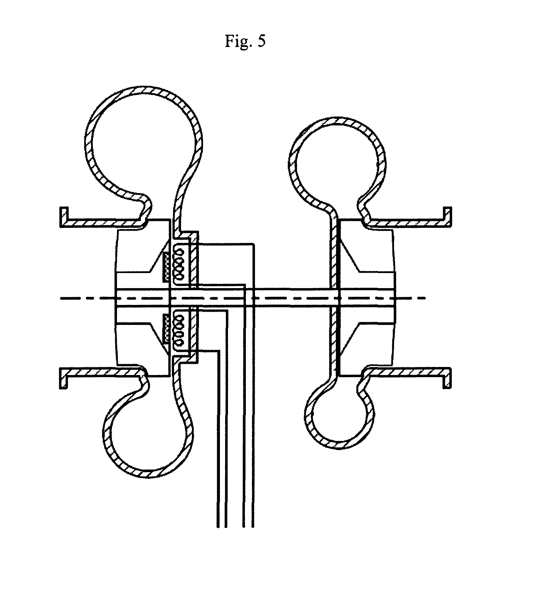

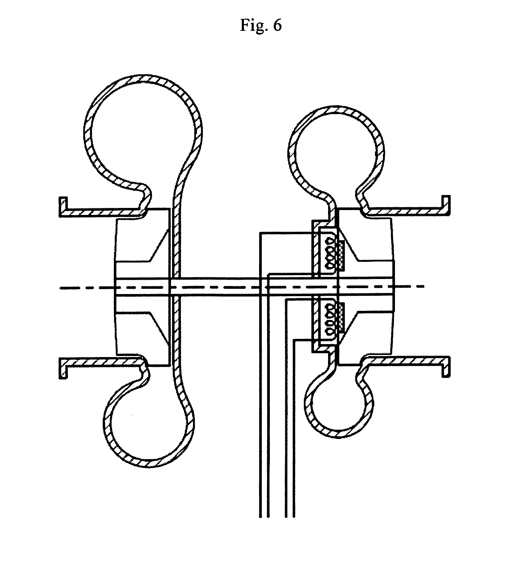

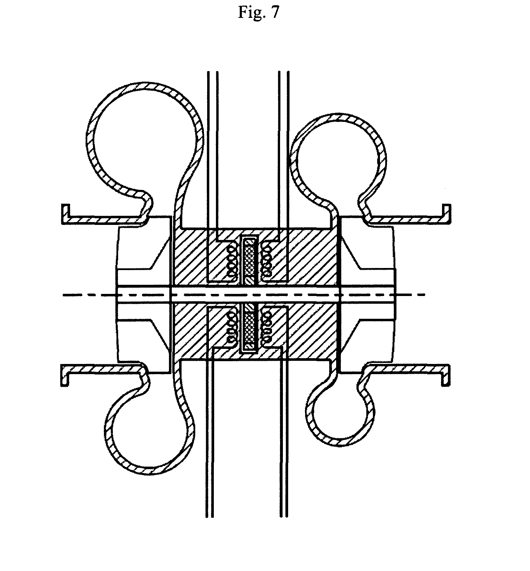

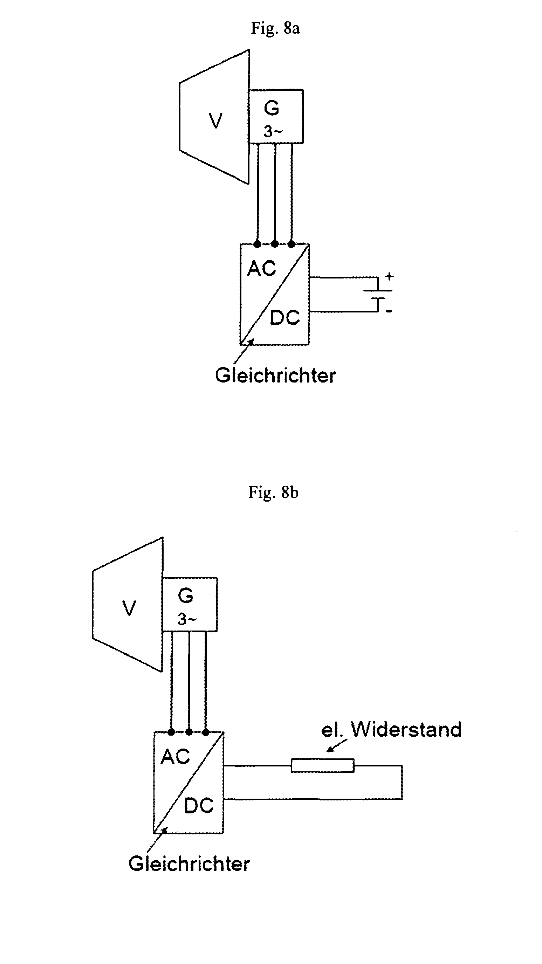

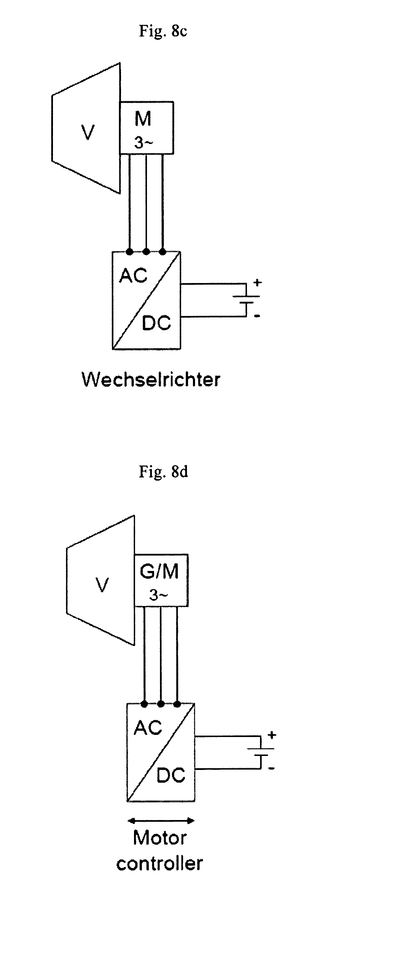

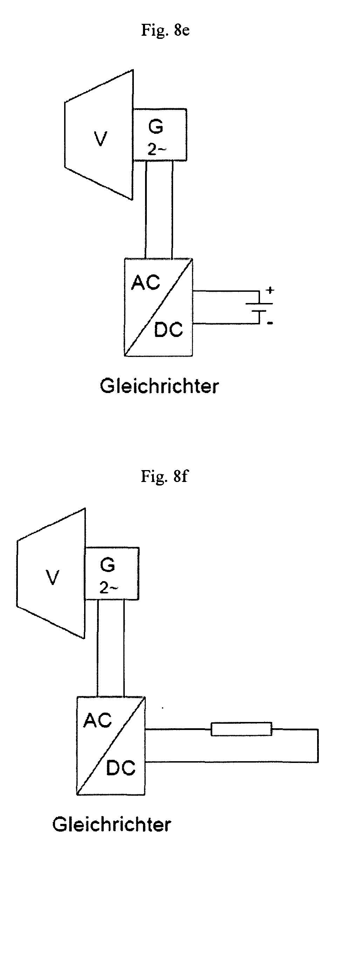

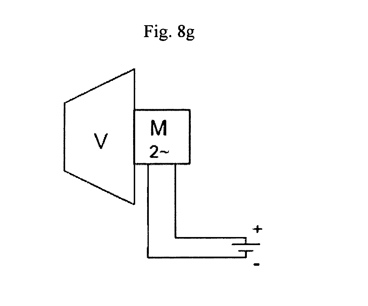

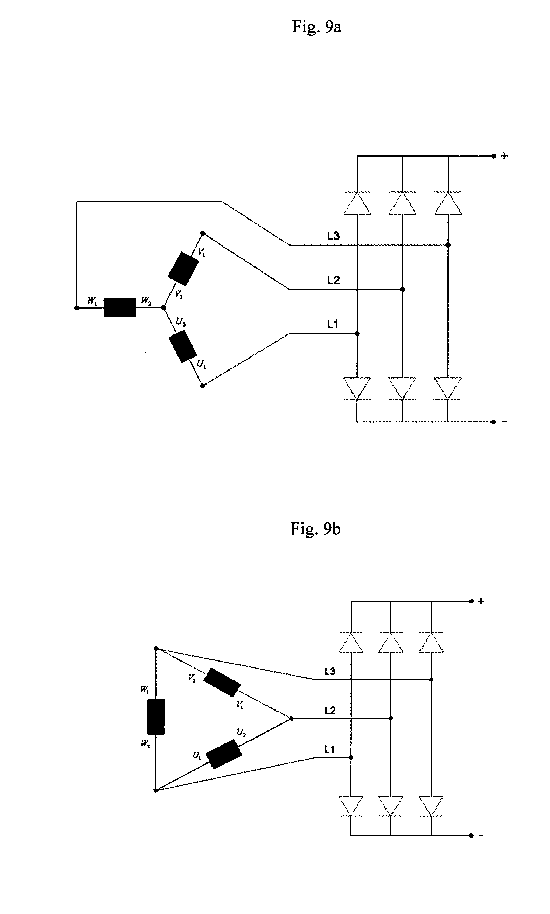

Fig. 5 zeigt einen Turbinenläufer und Fig. 6 einen Verdicherläufer und Fig. 7 eine in der Mitte angeordnete Scheibe. Fig. 8a-g zeigt diverse Möglichkeiten eines elektrischen Anschlusses und Fig. 9a, b eine Sternschaltung bzw. eine Dreieckschaltung mit Brückengleichrichter, wie sie der Fachmann einsetzen könnte.

Fig. 9a zeigt eine Sternschaltung und Fig. 9b zeigt eine Dreieckschaltung mit Brückengleichrichter. $L_1$, $L_2$, $L_3$ stellen hierbei einzelne Phasenstränge dar.

Hierbei berechnet sich die elektrische Leistung eines Scheibenläufers nach folgender Formel:
wobei

$$U_{rms} = \sqrt{\frac{\left( B \cdot l_m \cdot \pi \cdot D \cdot \frac{n}{60} \cdot N \right)^2}{2}}$$

und

$$I = J \cdot d^2 \cdot \frac{\pi}{4}$$

und wobei Randbedingungen gelten:

1 Stator, 1 Rotor, 3-Phasenbetrieb gelten, sowie: n= Drehzahl; U= Spannung; s=Anzahl Spulen; J= Stromdichte; N= Windungszahl; I= Stromstärke; P= Leistung; M= Drehmoment; D=Durchmesser Spulenkreis; d= Drahtdurchmesser; Urms= Effektivspannung; B= magnetische Flußdichte; lm= mittlere Windungslänge einer Spule.

Unterschied Stern- und Dreieckschaltung (3-Phasenbetrieb):

IStr= Strom einer einzelnen Phase (Strangstrom)
UStr= Spannung einer einzelnen Phase (Strangspannung)
phi= Phasenwinkel

Die Phasen (reell der Umfang der zu einer Phase gehörenden Spulen und Magnete) liefern jeweils ihre eigenen Ströme und Spannungen (Strangstrom und Strangspannung). Die einzelnen Phasen werden im Gleichrichter in Gleich- und Wechselstrom gewandelt.

Je nach Anordnung der Phasen (Stern- oder Dreieck) sind die resultierenden Ströme und Spannungen unterschiedlich:

Tabelle 1: Vergleich Stern- und Dreieckschaltung

| | Sternschaltung | Dreieckschaltung |
|---|---|---|
| Stromstärke | $I = I_{Str}$ | $I = \sqrt{3} \cdot I_{Str}$ |
| Spannung | $U = \sqrt{3} \cdot U_{Str}$ | $U = U_{Str}$ |
| Gesamtwirkleistung | | |

**Patentansprüche**

1. Vorrichtung zur Energiegewinnung im Abgaskreislauf eines Verbrennungsmotors, umfassend mindestens ein Abgasrohr, mindestens eine Abgasturbine, Mittel zum Erzeugen elektrischer Arbeit, und/oder Mittel zum Erzeugen thermischer Arbeit, wobei die Abgasturbine im Abgasrohr angeordnet ist und wobei die von der Abgasturbine bewirkte mechanische Arbeit von den Mitteln zum Erzeugen elektrischer Arbeit in elektrische Arbeit, und/oder wobei die von der Abgasturbine bewirkte thermische Arbeit, in thermische Arbeit umgewandelt wird.

2. Vorrichtung nach Anspruch 1, wobei die Mittel zum Erzeugen elektrischer Arbeit innerhalb eines Turboladers angeordnet sind und/oder wobei die Mittel zum Erzeugen thermischer Arbeit innerhalb des Turboladers angeordnet sind.

3. Vorrichtung nach einem der zuvor genannten Ansprüche, wobei die Mittel zum Erzeugen elektrischer Arbeit durch einen Scheibenläufer bereitgestellt werden.

4. Vorrichtung nach einem der zuvor genannten Ansprüche, wobei im Falle einer Abschaltung des Verbrennungsmotors der Turbolader durch die Mittel zum Erzeugen elektrischer Arbeit weiterhin betrieben werden.

5. Vorrichtung nach einem der zuvor genannten Ansprüche, umfassend ein Turbinenrad mit variabler Turbinengeometrie, und/oder variabler Geometrie des Abgasstrangs.

6. Vorrichtung nach einem der zuvor genannten Ansprüche, umfassend einen Dampferzeuger, wobei im Dampferzeuger Dampf erzeugt wird und umfassend einen Generator, wobei im Generator eine Dampfturbine angeordnet ist, und wobei der Dampf des Dampferzeugers diese Dampfturbine antreibt und wobei die Dampfturbine den elektrischen Generator antreibt.

7. Vorrichtung nach einem der zuvor genannten Ansprüche, umfassend eine Wasserpumpe, wobei die von der Abgasturbine bewirkte mechanische Arbeit die Wasserpumpe antreibt.

8. Vorrichtung nach einem der zuvor genannten Ansprüche, umfassend einen Klimakompressor, wobei die von der Abgasturbine bewirkte mechanische Arbeit den Klimakompressor antreibt.

9. Vorrichtung nach einem der zuvor genannten Ansprüche, wobei Magnet oder Spule des Generators an der Abgasturbine fixiert sind.

10. Abgasturbolader, umfassend eine Vorrichtung nach einem der Ansprüche 1 bis 9.

11. Abgasturbolader nach Anspruch 10, wobei die Wasserpumpe eine Kühlwasserpumpe des Turboladers umfasst.

12. Abgasturbolader nach einem der Ansprüche 10 oder 11, umfassend eine Elektromaschine, die wiederum den Generator umfasst.

13. Motor, umfassend einen Abgasturbolader nach einem der Ansprüche 10 bis 12 und/oder Vorrichtung zur Energiegewinnung im Abgaskreislauf eines Verbrennungsmotors umfassend einen der Ansprüche 1 bis 9.

14. Fahrzeug umfassend einen Motor nach Anspruch 13 und/oder einen Abgasturbolader nach einem der Ansprüche 10 bis 12 und/oder Vorrichtung zur Energiegewinnung im Abgaskreislauf eines Verbrennungsmotors umfassend einen der Ansprüche 1 bis 9.

Fig.1

Fig. 2

Fig.3

Fig. 4

Fig. 5

Fig. 6

Fig. 7

Fig. 8a

Gleichrichter

Fig. 8b

el. Widerstand

Gleichrichter

Fig. 8c

Wechselrichter

Fig. 8d

Motor
controller

Fig. 8e

Gleichrichter

Fig. 8f

Gleichrichter

Fig. 8g

Fig. 9a

Fig. 9b